# EUROPEAN PATENT SPECIFICATION

(11) **EP 4 048 087 B1**
(45) Date of publication and mention of the grant of the patent: **07.06.2023**
(21) Application number: 20790025.9
(22) Date of filing: 20.10.2020
(51) Int. Cl.: A23J 3/14, A23L 33/115, A23J 3/22, A23L 33/185

(54) **VEGETARIAN BURGER**
VEGETARISCHER BURGER
BURGER VÉGÉTARIEN

(30) Priority: 21.10.2019 EP 19204310; 21.10.2019 EP 19204323; 21.10.2019 EP 19204353; 21.10.2019 EP 19204338
(43) Date of publication of application: 31.08.2022
(73) Proprietor: Unilever IP Holdings B.V., 3013 AL Rotterdam (NL)
(72) Inventor: MELLEMA, Michel, 6708 WH Wageningen (NL); BOM, Paul, 4824 AV Breda (NL); VAN LEEUWEN, Nicole, Frederique, 4824 AV Breda (NL)
(74) Representative: Tjon, Hon Kong Guno
(86) International application number: PCT/EP2020/079435
(87) International publication number: WO 2021/078707

(56) References cited:
- WO-A1-2017/153930
- WO-A1-2019/120982
- US-A1- 2005 008 758
- US-A1- 2015 056 346

## Description

### Field of the invention

The present invention relates to a vegetarian burger, to a method of preparing such a burger for consumption and to a process of producing such a vegetarian burger.

### Background of the invention

A burger (or hamburger) is a cooked patty of ground meat, usually beef, that is typically placed inside a sliced bread roll or bun. The patty may be fried or grilled. Hamburgers are often served with cheese, lettuce, tomato, onion, pickles, bacon, or chilli; condiments such as ketchup, mayonnaise, mustard, relish, or "special sauce"; and are frequently placed on sesame seed buns.

Since the term "burger" usually implies beef, for clarity "burger" may be prefixed with the type of meat or meat substitute used, as in beef burger, turkey burger, chicken burger, fish burger or veggie burger.

A veggie burger (or vegetarian burger) is a burger patty that does not contain meat. These burgers may be made from ingredients like beans, especially soybeans and tofu, nuts, grains, seeds, algae or fungi such as mushrooms or mycoprotein. US 2015/056346 A1 discloses a method of producing a plant-based food product, the method comprising: (a) hydrating texturized protein particles with water and one or more heat denaturable soluble proteins to obtain hydrated plant protein particles; (b) adding a binding and thickening water solution to the hydrated plant protein particles so as to create a formable mass; (c) adding fat material to the formable mass; (d) after the addition of fat, forming the formable mass or one or more portions thereof into a patty; and grilling.

US 2005/008758 A1 discloses a method of preparing a meat analogue comprising: a) adding a first portion of water to a textured vegetable protein to form a hydrated textured vegetable protein; b) preparing a protein base comprising a powdered protein base and a second portion of water, wherein the powdered protein base comprises vital wheat gluten and milk-derived protein; c) forming a binder comprising a vegetable fat, a third portion of water, and a component selected from the group consisting of methyl cellulose, modified cornstarch, and a combination thereof; and d) combining the hydrated textured vegetable protein, the protein base, and the binder.

### Summary of the invention

The inventors have developed a vegetarian burger in the form of a patty that can be cooked in the same way as ordinary meat burgers to produce a cooked burger that in terms of eating quality and appearance is very similar to meat-based reference products. The vegetarian burger of the present invention is easy to manufacture and can be stored in frozen form until it is prepared for consumption.

A first aspect of the invention relates to a vegetarian burger having an average diameter of 80-150 mm and an average height of 5-15 mm, said burger comprising the following components:
(a) 30-80% by weight of the vegetarian burger of hydrated textured vegetable protein (TVP) pieces;
(b) 15-50% by weight of the vegetable burger of a binder suspension containing the following ingredients
   (b1) 2-12% by weight of the binder suspension of methyl cellulose;
   (b2) 0.3-8% by weight of the binder suspension of non-denatured patatin;
   (b3) 25-70% by weight of the binder suspension of fat;
   (b4) 25-70% by weight of the binder suspension of water;
   wherein the combination of components (a) to (b) constitutes at least 80 wt.%, preferably at least 90 wt.% of the vegetarian burger.

The vegetarian burger of the present invention comprises hydrated TVP pieces that are held together by a binder suspension that contains water, fat, methyl cellulose and non-denatured patatin. The binder suspension acts as a lubricant and a glue that allows for the preparation of a coherent dough that can be pumped and/or shaped into a burger, and that ensures that the burger does not fall apart during storage, handling and preparation of the vegetarian burger. During preparation of the vegetarian burger, the binder suspension undergoes a transition that is believed to be associated with denaturation of the non-denatured patatin and heat-induced gelation of the methyl cellulose. This transition has a favourable impact on the texture and taste (e.g. flavour release) of the ready-to-eat vegetarian burger. Favourable texture includes a desirable bite, chewing granularity comparable to meat burgers. Favourable taste includes decreased off-flavour, natural colour and fried appearance comparable to meat burgers. A second aspect of the invention relates to a method of preparing the aforementioned vegetarian burger for consumption, said method comprising frying or grilling the vegetarian burger to produce a cooked vegetarian burger and placing the cooked vegetarian burger inside a cut bun.

A third aspect of the invention relates to a process of preparing the vegetarian burger of the present invention, said process comprising:
- mixing textured vegetable protein (TVP) particles with water to produce hydrated TVP pieces;
- mixing the hydrated TVP pieces with methyl cellulose, potato protein concentrate, fat and water to produce a vegetarian dough, wherein the potato protein concentrate contains, calculated by weight of the dry mater of the potato protein concentrate, at least 50 wt.% non-denatured patatin;
- shaping the vegetarian dough into a patty.

### Detailed description of the invention

The words 'comprising' and 'containing' as used herein should not be interpreted restrictively as meaning 'consisting of'. In other words, besides the features listed after these words, non-listed features may be present.

Unless specified otherwise, numerical ranges expressed in the format 'from x to y' or 'x-y' are understood to include x and y. When for a specific feature multiple preferred ranges are described in the format 'from x to y' or 'x-y', it is understood that all ranges combining the different endpoints are also contemplated. For the purpose of the invention ambient temperature is defined as a temperature of about 20°C.

Unless indicated otherwise, weight percentages (wt.%) are based on the total weight of the composition. Also, unless indicated otherwise, weight percentages as based on wet weight.

The term "water content" as used herein, unless indicated otherwise, relates to the total water content.

The term "textured or texturized vegetable protein (TVP)" as used herein refers to a food ingredient made from edible protein sources and characterised by having structural integrity and identifiable texture such that each unit will withstand hydration in cooking and other procedures used in preparing the food for consumption. TVP is typically produced by extrusion.

The term "non-denatured patatin" as mentioned herein refers to patatin that still has the secondary structure which is present in patatin that is in its native state.

The terms "oil" and "fat" as used herein refer to a glyceride component that contains at least 80 wt.% of glycerides selected from triglycerides, diglycerides and combinations thereof.

The term "dry matter" as used herein refers to the matter that remains after water and other volatile components have been removed by evaporation using a forced-air oven (2 hours at 103°C, or longer if not all moisture has been removed).

Besides the hydrated TVP pieces and the binder suspension the vegetarian burger may contain other ingredients in the form of particulate material having a particle weight of at least 1 mg. Pieces of vegetable or spices are an example of such a particulate material.

The vegetarian burger of the present invention is preferably uncooked, allowing local preparation of the cooked burger using conventional cooking techniques such as grilling and frying. Here "uncooked" means that the complete vegetarian burger, i.e. the vegetarian burger as whole, has not been heated to temperatures in excess of 60°C. Ingredients of the burger, such as the TVP pieces, however, may have been heated to temperatures in excess of 60°C during the production thereof.

In another advantageous embodiment, the vegetarian burger is frozen. More preferably the burger is a frozen uncooked burger. Frozen distribution and storage offers the advantage that, especially when the vegetarian burger is uncooked, the product can be stored for a long time until it is prepared for consumption. The 'meaty' character of the vegetarian burger of the present invention is well retained during frozen storage.

The vegetarian burger of the present invention may contain animal products other than meat, such as egg and dairy products. Preferably, however, the vegetarian burger is a vegan burger that does not contain any animal products.

The vegetarian burger typically has a weight of 35-200 grams, more preferably of 40-140 grams.

The average height of the vegetarian burger is preferably in the range of 8-13 mm, most preferably in the range of 9-12 mm.

The water content of the vegetarian burger typically lies in the range of 50-70%, more preferably in the range of 55-65% by weight of the vegetarian burger.

The protein content of the vegetarian burger preferably lies in the range of 10-20%, more preferably in the range of 12-18% by weight of the vegetarian burger.

Preferably, at least 70 wt.%, more preferably at least 80 wt.% of the total amount of protein of the vegetarian burger is plant protein selected from soy protein, legume protein, wheat protein, rice protein and combinations thereof. Examples of legume proteins that can be used include lentil protein, pea protein, fababean protein, lupin protein, and combinations thereof.

According to a particularly preferred embodiment, at least 50 wt.%, more preferably at least 60 wt.% and most preferably at least 75 wt.% of the total amount of protein of the vegetarian burger is soy protein.

The total fat content of the vegetarian burger preferably lies in the range of 8-22%, more preferably in the range of 10-20% by weight of the vegetarian burger.

The total amount of fat in the vegetarian burger typically has the following fatty acid composition:
20-40 wt.% palmitic acid;
0-20 wt.% stearic acid;
12-60 wt.% oleic acid;
10-50 wt.% polyunsaturated fatty acid;
wherein the total amount of saturated fatty acids does not exceed 50 wt.%. The fatty acid composition of the fat can be determined using ISO method 12966-4: 2015.

The vegetarian burger preferably contains 1-5%, more preferably 1.5-3.5% by weight of the vegetarian burger of dietary fiber.

Calculated by weight of the dry matter of the vegetarian burger, the burger preferably contains 3-15 wt.%, most preferably 4-9 wt.% of dietary fiber.

Carbohydrates are preferably contained in the vegetarian burger in a concentration of 1-8%, more preferably 2-6% by weight of the vegetarian burger of carbohydrates.

Calculated by weight of the dry matter of the vegetarian burger, the burger preferably contains 2-20 wt.%, most preferably 4-15 wt.% of carbohydrates.

The starch content of the vegetarian burger, calculated by weight of the dry matter of the burger, preferably lies in the range of 2-18 wt.%, more preferably in the range of 3-14 wt.%.

Preferably, the burger contains, calculated by weight of the dry matter of the burger, 0-4% sugars, most preferably 0-2% sugars.

The vegetarian burger of the present invention preferably contains 0.2-3%, more preferably 0.3-2% salt by weight of the vegetarian burger. Here the term salt refers to sodium chloride, potassium chloride and combinations thereof.

The vegetarian burger preferably has an open structure, i.e. the interior of the burger comprises small spaces that are filled with air. Typically, the burger has a density of 0.8 to 1.2 g/L, more preferably a density of 0.95 to 1.15 g/L.

The pH of the vegetarian burger preferably lies in the range of pH 5 to pH 7.5, more preferably in the range of pH 5.8 to pH 6.8.

In a preferred embodiment, the vegetarian burger contains 40-75%, more preferably 50-72% by weight of the vegetarian burger of the hydrated TVP pieces.

The hydrated TVP pieces can be prepared by soaking dry TVP particles with water. Dry TVP particles are commercially available. These dry TVP particles are typically produced by extrusion cooking and drying.

The hydrated TVP pieces in the vegetarian burger typically have a water content of at least 50%, more preferably of 60-78% by weight of the hydrated TVP pieces.

Protein is preferably contained in the hydrated TVP pieces in a concentration, calculated by weight of the dry matter of the hydrated TVP pieces, of at least 50 wt.%, more preferably of at least 60 wt.%, most preferably of at least 62 wt.%.

The hydrated TVP pieces present in the vegetarian burger can have different shapes, such as sphere-like, fiber-like and sheet-like.

The hydrated TVP pieces in the vegetarian burger typically contain, calculated by weight of the dry matter of the hydrated TVP pieces, 50-80 wt.% protein, 0-5 wt.% fat and 3-30 wt.% dietary fiber. More preferably, the hydrated TVP pieces in the vegetarian burger contain, calculated by weight of the dry matter of the hydrated TVP pieces, 65-75 wt.% protein, 0.5-4 wt.% fat and 6-24 wt.% dietary fiber.

Preferably, at least 80 wt.%, more preferably at least 90 wt.% of the total amount of protein of the hydrated TVP pieces is plant protein selected from soy protein, legume protein, wheat protein, rice protein and combinations thereof. Examples of legume proteins that can be used include lentil protein, pea protein, fababean protein, lupin protein and combinations thereof.

In a more preferred embodiment, at least 80 wt.%, more preferably at least 90 wt.% and most preferably at least 95 wt.% of the total amount of protein of the hydrated TVP pieces is protein selected from soy protein, pea protein, gluten and combinations thereof.

According to a particularly preferred embodiment, at least 70 wt.%, more preferably at least 80 wt.%, most preferably at least 85 wt.% of the total amount of protein of the hydrated TVP pieces is soy protein.

The vegetarian burger preferably comprises 18-48%, more preferably 20-45% and most preferably 25-42% by weight of the vegetarian burger, of the binder suspension containing water, fat, methyl cellulose and non-denatured patatin.

The water content of the binder suspension preferably lies in the range of 28-60%, more preferably in the range of 30-50% by weight of the binder suspension.

Methyl cellulose is preferably present in the binder suspension in a concentration of 2.5-10%, more preferably of 3-8% by weight of the binder suspension.

The vegetarian burger preferably contains, calculated by weight of the dry matter of the burger, 2.5-10 wt.%, more preferably 3.0-9.0 wt.%, most preferably 5.0-8.0 wt.% of methyl cellulose.

The methyl cellulose employed in accordance with the present invention preferably has a methoxyl content of 20% to 40%, more preferably of 24% to 36%.

In another preferred embodiment, the methyl cellulose employed has a viscosity at a temperature of 20°C and a concentration of 2 wt.% in water of 20,000-1,000,000 cP, more preferably of 30,000-500,000 cP and most preferably of 35,000-200,000 cP.

The molecular weight of the methyl cellulose preferably lies in the range of 100 to 250 kDa, more preferably in the range of 150 to 220 kDa.

According to a preferred embodiment, the methyl cellulose has a gelation temperature of at least 30°C, more preferably a gelation temperature in the range of 35°C to 60°C, most preferably a gelation temperature in the range of 40°C to 50°C.

Non-denatured patatin is preferably present in the binder suspension in a concentration of 0.5-6, more preferably of 0.6-4% by weight of the binder suspension.

Patatin is a glycoprotein found in potatoes (*Solanum tuberosum*). The main function of patatin is as a storage protein but it also has lipase activity and can cleave fatty acids from membrane lipids. Patatin makes up about 40% of the soluble protein in potato tubers.

The vegetarian burger preferably contains, calculated by weight of the dry matter of the burger, 0.3-6.0 wt.%, more preferably 0.6-5.0 wt.% of non-denatured patatin.

According to a particularly preferred embodiment, non-denatured patatin has been introduced into the vegetarian burger in the form of potato protein fraction that contains, calculated by weight of dry matter, at least 50 wt.%, more preferably at least 60 wt.% and most preferably at least 70 wt.% non-denatured patatin.

Typically, non-denatured patatin constitutes at least 60 wt.%, more preferably at least 70 wt.% and most preferably at least 75 wt.% of the potato protein that is present in the vegetarian burger.

Methyl cellulose and non-denatured patatin are typically present in the vegetarian burger in a weight ratio of 1:1 to 8:1. More preferably, methyl cellulose and non-denatured patatin are present in the vegetarian burger in a weight ratio of 3:2 to 6:1.

The fat content of the binder suspension preferably lies in the range of 30-68%, more preferably of 35-65

The water content of the binder suspension preferably lies in the range of 28-65%, more preferably of 32-60% by weight of the binder suspension.

Together, the water and fat present in the binder suspension preferably constitute at least 50 wt.%, more preferably at least 60 wt.% and most preferably 70 wt.% of said binder suspension.

Taken together, the methyl cellulose, non-denatured patatin, fat and water present in the binder suspension preferably constitutes at least 60 wt.%, more preferably at least 70 wt.% and most preferably at least 80 wt.% of said binder suspension.

Besides hydrated TVP pieces, methyl cellulose, non-denatured patatin, fat and water, the vegetarian burger of the present invention can contain additional ingredients such as herbs, spices, sugars, flavouring, colouring, emulsifiers, hydrocolloids, vitamins, minerals and combinations thereof.

Preferably, the vegetarian burger comprises added caramelised material selected from caramel, burnt sugar, malt extract and combinations thereof. More preferably, the vegetarian burger comprises 0.01-1%, by weight of the vegetarian burger of the caramelized material.

The term "caramel" as used herein, unless indicated otherwise, refers to a water-soluble food colouring that is made by heating carbohydrates either alone or in the presence of acids, alkalis, and/or salts. Carbohydrates used the commercial production of caramel colouring include fructose, glucose, invert sugar, sucrose, malt syrup, molasses, starch hydrolysates, and fractions thereof. The acids that may be used are sulfuric, sulfurous, phosphoric, acetic, and citric acids; the alkalis are ammonium, sodium, potassium, and calcium hydroxides; and the salts are ammonium, sodium, and potassium carbonate, bicarbonate, phosphate (including mono- and dibasic), sulfate, and bisulfite. Internationally, the United Nations Joint Food and Agriculture Organization/World Health Organization Expert Committee on Food Additives (JECFA) recognizes four classes of caramel colour, differing by the reactants used in their manufacture, each with its own INS and E number:

| Class | INS/E number | Description |
|---|---|---|
| I | 150a / E 150a | Plain caramel |
| II | 150b / E 150b | Caustic sulfite caramel |
| III | 150c / E 150c | Ammonia caramel |
| IV | 150d / E 150d | Sulfite ammonia caramel |

The term "burnt sugar" as used herein refers to caramalised sugar, also known as "caramel sugar", that has been produced by heating sugar without the use of chemical reactants that are used in the production of the above mentioned caramel colourings.

The caramelised material applied in the vegetarian burger preferably is caramel, burnt sugar or a combination thereof. According to a particularly preferred embodiment, the caramel material employed in the binder suspension is burnt sugar. Typically, the burnt sugar has a sugar content of at least 80 wt.%, more preferably of at least 90 wt.%, calculated by weight of the burnt sugar.

According to a particularly preferred embodiment, the burger contains vegetable carbon. Here, the term "vegetable carbon" refers to particles of carbonized vegetable material. According to a preferred embodiment, the vegetable carbon is a form of finely divided carbon produced by steam activation of carbonized raw material of vegetable origin that has been assigned E number E 153. Preferably, the vegetarian burger contains 0.01-0.3%, more preferably 0.02-0.2% by weight of the vegetarian burger of vegetable carbon.

According to a particularly preferred embodiment, the vegetable carbon is contained in the binder suspension.

Preferably, not more than 20 wt.%, more preferably not more than 10 wt.% of the vegetable carbon of the burger is contained within the hydrated TVP pieces.

The vegetable carbon preferably has a particle size distribution, determined by laser diffraction, that meets the following condition: at least 80 wt.% of the carbon particles has a size within the range of 0.5 and 50 µm. Vegetable carbon may suitably be introduced in the form of a suspension.

Another aspect of the invention relates to a method of preparing a vegetarian burger according to the present invention for consumption, said method comprising frying or grilling the vegetarian burger to produce a cooked vegetarian burger and placing the cooked vegetarian burger inside a cut bun.

Together with the cooked vegetarian burger other ingredients may be placed inside the cut bun. Examples of such ingredients include cheese, lettuce, tomato, onion, pickles, bacon, or chilli; condiments such as ketchup, mayonnaise, mustard, relish, or "special sauce".

Yet another aspect of the invention relates to a process of preparing a vegetarian burger as described herein before, said process comprising:
i. mixing textured vegetable protein (TVP) particles with water to produce hydrated TVP material;
ii. mixing the hydrated TVP pieces with methyl cellulose, potato protein concentrate, fat and water to produce a vegetarian dough, wherein the potato protein concentrate contains at least 50 wt.% non-denatured patatin by weight of dry matter;
iii. shaping the vegetarian dough into a patty.

The TVP particles employed in the present method preferably have a water content, calculated by weight of the TVP particles, of not more than 15 wt.%, more preferably of not more than 12 wt.%, most preferably of not more than 10 wt.%.

The TVP particles preferably contain, calculated by weight of the dry matter contained therein, 50-80 wt.% protein, 0-5 wt.% fat and 3-30 wt.% dietary fiber. More preferably, the TVP particles contain, calculated by weight of the dry matter that is contained therein, 65-75 wt.% protein, 0.5-4 wt.% fat and 6-24 wt.% dietary fiber.

Preferably, at least 80 wt.%, more preferably at least 90 wt.% of the total amount of protein of the TVP particles is plant protein selected from soy protein, legume protein, wheat protein, rice protein and combinations thereof. Examples of legume proteins that can be used include lentil protein, pea protein, fababean protein, lupin protein and combinations thereof

In a more preferred embodiment, at least 80 wt.%, more preferably at least 90 wt.% and most preferably at least 95 wt.% of the total amount of protein of the TVP particles is protein selected from soy protein, pea protein, gluten and combinations thereof.

According to a particularly preferred embodiment, at least 70 wt.%, more preferably at least 80 wt.%, most preferably at least 85 wt.% of the total amount of protein of the TVP particles is soy protein.

The hydrated TVP particles are preferably prepared by mixing 1 part by weight of the TVP particles with 1.5 to 3 parts by weight of water.

The hydrated TVP pieces, the methyl cellulose, the non-denatured patatin and the fat employed in the present process preferably are as specified herein before.

The potato protein concentrate employed in the present process preferably contains at least 60 wt.%, more preferably at least 70 wt.% non-denatured patatin by weight of dry matter

According to a particularly preferred embodiment, during step ii of the present process, the ingredients of the patty are kept at a temperature in the range of -5°C to 30°C, more preferably in the range of -3°C to 20°C, most preferably in the range of -2°C to 16°C.

Preferably, in shaping step iii the dough has a temperature in the range of -5°C to 20°C, more preferably in the range of -3°C to 15°C, most preferably in the range of -2°C to 12°C.

In the present process the vegetarian burger is preferably frozen and packaged.

The present invention is further illustrated by the following non-limiting examples.

### Examples

### Example 1

Vegan burgers according to the present invention were prepared on the basis of the recipe shown in Table 1.

**Table 1**

| | Wt.% |
|---|---|
| TVP Contex 300 ¹ | 19.14 |
| Methocel Bind 250 ² | 2.20 |
| Solanic 200 ³ | 0.50 |
| Z-K5000 Rudinblack ⁴ | 0.05 |
| Pepper | 0.20 |
| Salt | 0.40 |
| Caramel sugar NCS23P ⁵ | 0.15 |
| Flavouring | 1.20 |
| JFI Palmstearin 54 LT (MB) ⁶ | 16.00 |
| Water | 60.16 |

| | |
|---|---|
| 1 Textured vegetable protein; Solbar Ningbo Protein Technology, Ningbo, China (68 wt.% protein, 8 wt.% moisture) 2 Methyl cellulose; The Dow Chemical Company 3 Potato protein isolate; Avebe, the Netherlands 4 Vegetable Carbon (E 153); Huijbregts Groep, the Netherlands 5 Huijbregts Groep, the Netherlands 6 Palm stearin powder (melting point 51-55 °C), Juchem Food, Germany (The remaining ingredients were obtained in Europe) 7 | |

The burgers were prepared on lab-scale using the following procedure:
- 1.914 kg of textured vegetable protein was mixed with 2.35 kg tap water (10°C) in a vacuum bag. This pre-determined amount of water is sufficient to fully hydrate the textured vegetable protein. The bag was sealed and stored at 7 °C;
- After 1 hour of hydration at 7 °C, the hydrated textured vegetable protein was introduced in a Kenwood mixer. Next, he potato protein and the methyl cellulose were added, followed by mixing for 2 minutes at low speed (speed 2);
- The remainder of the water was added, followed by mixing for 20 seconds;
- The vegetable carbon and the caramel sugar were added, followed by mixing for 20 seconds;
- Flavouring, spices and salt were added, followed by mixing for 20 seconds;
- Palm stearin powder was added, followed by mixing for 20 seconds;
- The dough mass so prepared was transferred into a bowl and put in a freezer to cool down to 1 °C (in 45 minutes);
- The dough mass was taken out of the freezer, mixed again for 20 seconds and shaped by hand into burger patties having a diameter of 12 cm and a thickness of 1 cm, using a patty shaper';
- The patties so obtained were frozen and stored at -21°C.

### Example 2

The vegan burgers of Example 1 were prepared for consumption by pan frying. One table spoon of sunflower oil was added to a 20cm diameter Tefal^{®} Teflon^{®} coated pan, which was placed on a medium heat gas stove to which the burger was added. The burger was pan fried for 4 minutes in total, 2 minutes on each side.

An expert panel (n=3) evaluated the appearance, taste and texture of the freshly prepared vegetarian burgers. The vegan burger of Example 1 was compared to commercially available vegetarian burgers:
A ("Beyond Meat Burger", El Segundo, CA, USA),
B ("Incredible Burger", Garden Gourmet, Nestlé, Switzerland),

The vegan burger of Example 1 was found to be superior in terms of bite, chewing granularity, off-flavour, natural colour and fried appearance. Furthermore, the vegan burger of Example 1 was clearly preferred by the panel over the commercially available vegetarian burgers.

### Example 3 and Comparative Example A

Burgers were prepared as in Example 1 on the basis of the recipes shown in Table 2.

**Table 2**

| Ingredients | (Invention) Example 3 | Comparative Example C |
|---|---|---|
| | Wt. % | Wt. % |
| TVP Contex 300 | 19.14 | 19.14 |
| Methocel Bind 250 | 2.20 | 2.20 |
| Solanic 200 | 1.0 | |
| Whey protein powder * | | 1.0 |
| Z-K5000 Rudinblack | 0.05 | 0.05 |
| Pepper | 0.20 | 0.20 |
| Salt | 0.40 | 0.40 |
| Caramel sugar NCS23P | 0.15 | 0.15 |
| Flavouring | 1.20 | 1.20 |
| JFI Palmstearin 54 LT (MB) | 16.00 | 16.00 |
| Water | 59.66 | 59.66 |

| | | |
|---|---|---|
| * Whey protein powder, Käserei Champignon Hofmeister GmbH, Langenfeld, Germany. Other ingredients see example 1 | | |

Cooking of the burgers: The burgers of example 3 and comparative example A (113g patties, 1cm thickness) were cooked in a kitchen oven at 300 °C for 4.5 minutes and then left to cool to room temperature.

Texture analysis of the burgers: The burgers were subjected to an 80% strain compression test (a 'return-to-start' test) using a texture analyser (TA.XT Plus, Texture Technologies, Scarsdale, NY) fitted with a 50kg load cell and 13mm diameter compression probe. Sample were measured at 20 °C. The probe approached the sample at a speed of 1 mm/s, test speed was set at 1 mm/s, and post-test speed was 10 mm/s. The burger was punctured at 5 locations (cross wise: the four outer measurement not closer to the edge of the burger than 1.5 cm and one in the center). Compression force was recorded after sensing more than 5 gram force (at a rate of 25 measurements per second) and the maximum force (in gram) was read from the curve at 50% strain as a measure for firmness and bite. The measurement was repeated to obtain a total of 10 measurements. Average values and standard deviation were calculated.

**Table 3**

| | AVE max force (g ± SD) |
|---|---|
| Example 3 (Invention) | 2316 ± 199 |
| Comparative Example A | 1784 ± 163 |

The data in Table 3 show that Example 3 according to the invention was surprisingly firmer than comparative Example A. This was also confirmed sensorially by a stronger bite when eating Example 3 compared to Example A.

## Claims

1. A vegetarian burger having an average diameter of 80-150 mm and an average height of 5-15 mm, said burger comprising the following components:
(a) 30-80% by weight of the vegetarian burger of hydrated textured vegetable protein (TVP) pieces;
(b) 15-50% by weight of the vegetable burger of a binder suspension containing the following ingredients
(b1) 2-12% by weight of the binder suspension of methyl cellulose;
(b2) 0.3-8% by weight of the binder suspension of non-denatured patatin;
(b3) 25-70% by weight of the binder suspension of fat;
(b4) 25-70% by weight of the binder suspension of water;
wherein the combination of components (a) to (b) constitutes at least 80 wt.% of the vegetarian burger.

2. Vegetarian burger according to claim 1, wherein the vegetarian burger is uncooked.

3. Vegetarian burger according to claim 1 or 2, wherein the vegetarian burger contains, calculated by weight of the vegetarian burger, 10-20 wt.% protein, 8-22 wt.% fat and 50-70 wt.% water.

4. Vegetarian burger according to any one of the preceding claims, wherein the TVP pieces contain, calculated by weight of the dry matter of the TVP pieces, 50-80 wt.% protein, 0-5 wt.% fat and 3-30 wt.% dietary fiber.

5. Vegetarian burger according to any one of the preceding claims, wherein at least 80 wt.% of the total amount of protein of the TVP pieces is protein selected from soy protein, pea protein, gluten and combinations thereof.

6. Vegetarian burger according to claim 5, wherein at least 80 wt.% of the total amount of protein of the TVP pieces is soy protein.

7. Vegetarian burger according to any one of the preceding claims, wherein the vegetarian burger contains, calculated by weight of the dry matter of the burger, 2.5-10 wt.% methyl cellulose.

8. Vegetarian burger according to any one of the preceding claims, wherein the methyl cellulose has a gelation temperature of at least 30°C.

9. Vegetarian burger according to any one of the preceding claims, wherein the vegetarian burger contains, calculated by weight of the dry matter of the burger, 0.3-6.0 wt.% of non-denatured patatin.

10. Vegetarian burger according to any one of the preceding claims, wherein methyl cellulose and non-denatured patatin are present in the binder suspension in a weight ratio of 1:1 to 6:1.

11. Vegetarian burger according to any one of the preceding claims, wherein the burger comprises the following components:
(a) 50-72% by weight of the vegetarian burger of hydrated TVP pieces;
(b) 25-42% by weight of the vegetable burger of a binder suspension containing the following ingredients
(b1) 3.0-8.0% by weight of the binder suspension of methyl cellulose;
(b2) 0.5-6% by weight of the binder suspension of non-denatured patatin;
(b3) 35-65% by weight of the binder suspension of fat;
(b4) 32-60% by weight of the binder suspension of water;
wherein the combination of components (a) to (b) constitutes at least 90 wt.% of the vegetarian burger.

12. A method of preparing a vegetarian burger according to any one of the preceding claims for consumption, said method comprising frying or grilling the vegetarian burger to produce a cooked vegetarian burger and placing the cooked vegetarian burger inside a cut bun.

13. A process of preparing a vegetarian burger according to any one of claims 1-11, said process comprising:
i. mixing textured vegetable protein (TVP) particles with water to produce hydrated TVP pieces;
ii. mixing the hydrated TVP pieces with methyl cellulose, potato protein concentrate, fat and water to produce a vegetarian dough, wherein the potato protein concentrate contains, calculated by weight of the dry mater of the potato protein concentrate, at least 50 wt.% non-denatured patatin;
iii. shaping the vegetarian dough into a patty.

14. Process according to claim 13, wherein vegetarian dough has a temperature of not more than 10°C when it is shaped into a patty.

15. Process according to claim 13 or 14, wherein during step ii the ingredients of the patty are kept at a temperature in the range of -5°C to 30°C.

## Patentansprüche

1. Vegetarischer Burger mit einem durchschnittlichen Durchmesser von 80 - 150 mm und einer durchschnittlichen Höhe von 5 - 15 mm, wobei der Burger die folgenden Komponenten umfasst:
(a) 30 - 80% hydratisiertes texturiertes pflanzliches Protein (TVP)-Stücke, bezogen auf das Gewicht des vegetarischen Burgers,
(b) 15 - 50% einer Bindemittelsuspension, bezogen auf das Gewicht des vegetarischen Burgers, enthaltend die folgenden Bestandteile:
(b1) 2 - 12% Methylcellulose, bezogen auf das Gewicht der Bindemittelsuspension;
(b2) 0,3 - 8% nicht-denaturiertes Patatin, bezogen auf das Gewicht der Bindemittelsuspension;
(b3) 25 - 70% Fett, bezogen auf das Gewicht der Bindemittelsuspension;
(b4) 25 - 70% Wasser, bezogen auf das Gewicht der Bindemittelsuspension;
wobei die Kombination der Komponenten (a) bis (b) mindestens 80 Gew.-% des vegetarischen Burgers ausmacht.

2. Vegetarischer Burger nach Anspruch 1, wobei der vegetarische Burger ungekocht ist.

3. Vegetarischer Burger nach Anspruch 1 oder 2, wobei der vegetarische Burger, berechnet nach Gewicht des vegetarischen Burgers, 10 - 20 Gew.-% Protein, 8 - 22 Gew.-% Fett und 50 - 70 Gew.-% Wasser enthält.

4. Vegetarischer Burger nach irgendeinem der vorhergehenden Ansprüche, wobei die TVP-Stücke, berechnet nach Gewicht der Trockenmasse der TVP-Stücke, 50 - 80 Gew.-% Protein, 0 - 5 Gew.-% Fett und 3 - 30 Gew.-% Nahrungsfasern enthalten.

5. Vegetarischer Burger nach irgendeinem der vorhergehenden Ansprüche, wobei mindestens 80 Gew.-% der Gesamtmenge des Proteins der TVP-Stücke Protein sind, ausgewählt aus Sojaprotein, Erbsenprotein, Gluten und Kombinationen davon.

6. Vegetarischer Burger nach Anspruch 5, wobei mindestens 80 Gew.-% der Gesamtmenge des Proteins der TVP-Stücke Sojaprotein sind.

7. Vegetarischer Burger nach irgendeinem der vorhergehenden Ansprüche, wobei der vegetarische Burger, berechnet nach Gewicht der Trockenmasse des Burgers, 2,5 - 10 Gew.-% Methylcellulose enthält.

8. Vegetarischer Burger nach irgendeinem der vorhergehenden Ansprüche, wobei die Methylcellulose eine Geliertemperatur von mindestens 30°C aufweist.

9. Vegetarischer Burger nach irgendeinem der vorhergehenden Ansprüche, wobei der vegetarische Burger, berechnet nach Gewicht der Trockenmasse des Burgers, 0,3 - 6,0 Gew.-% nicht-denaturiertes Patatin enthält.

10. Vegetarischer Burger nach irgendeinem der vorhergehenden Ansprüche, wobei Methylcellulose und nicht-denaturiertes Patatin in der Bindemittelsuspension in einem Gewichtsverhältnis von 1:1 bis 6:1 vorliegen.

11. Vegetarischer Burger nach irgendeinem der vorhergehenden Ansprüche, wobei der Burger die folgenden Komponenten umfasst:
(a) 50 - 72% hydratisierte TVP-Stücke, bezogen auf das Gewicht des vegetarischen Burgers,
(b) 25 - 42% einer Bindemittelsuspension, bezogen auf das Gewicht des vegetarischen Burgers, enthaltend die folgenden Bestandteile:
(b1) 3,0 - 8,0% Methylcellulose, bezogen auf das Gewicht der Bindemittelsuspension;
(b2) 0,5 - 6% nicht-denaturiertes Patatin, bezogen auf das Gewicht der Bindemittelsuspension;
(b3) 35 - 65% Fett, bezogen auf das Gewicht der Bindemittelsuspension;
(b4) 32 - 60% Wasser, bezogen auf das Gewicht der Bindemittelsuspension;
wobei die Kombination der Komponenten (a) bis (b) mindestens 90 Gew.-% des vegetarischen Burgers ausmacht.

12. Verfahren zur Herstellung eines vegetarischen Burgers nach irgendeinem der vorhergehenden Ansprüche zum Verzehr, wobei das Verfahren Braten oder Grillen des vegetarischen Burgers umfasst, um einen gekochten vegetarischen Burger zu erzeugen und Platzieren des gekochten vegetarischen Burgers innerhalb eines geschnittenen Brötchens.

13. Verfahren zur Herstellung eines vegetarischen Burgers nach irgendeinem der Ansprüche 1 - 11, wobei das Verfahren umfasst:
i. Mischen von texturierten Pflanzenprotein (TVP)-Partikeln mit Wasser, um hydratisierte TVP-Stücke herzustellen;
ii. Mischen der hydratisierten TVP-Stücke mit Methylcellulose, Kartoffelproteinkonzentrat, Fett und Wasser, um einen vegetarischen Teig herzustellen, wobei das Kartoffelproteinkonzentrat, berechnet nach Gewicht der Trockenmasse des Kartoffelproteinkonzentrats, mindestens 50 Gew.-% nicht-denaturiertes Patatin enthält;
iii. Formen des vegetarischen Teigs zu einem Pastetchen.

14. Verfahren nach Anspruch 13, wobei der vegetarische Teig eine Temperatur von nicht mehr als 10°C aufweist, wenn er in ein Pastetchen geformt wird.

15. Verfahren nach Anspruch 13 oder 14, wobei während des Schritts ii die Bestandteile des Pastetchens bei einer Temperatur in dem Bereich von -5°C bis 30°C gehalten werden.

## Revendications

1. Burger végétarien ayant un diamètre moyen de 80-150 mm et une hauteur moyenne de 5-15 mm, ledit burger comprenant les constituants suivants :
(a) 30-80 % en masse du burger végétarien de morceaux de protéine végétale texturée hydratée (TVP) ;
(b) 15-50 % en masse du burger végétal d'une suspension de liant contenant les ingrédients suivants
(b1) 2-12 % en masse de la suspension de liant de méthylcellulose ;
(b2) 0,3-8 % en masse de la suspension de liant de patatine non-dénaturée ;
(b3) 25-70 % en masse de la suspension de liant de graisse ;
(b4) 25-70 % en masse de la suspension de liant d'eau ;
dans lequel la combinaison des constituants (a) à (b) constitue au moins 80 % en masse du burger végétarien.

2. Burger végétarien selon la revendication 1, dans lequel le burger végétarien n'est pas cuit.

3. Burger végétarien selon la revendication 1 ou 2, dans lequel le burger végétarien contient, calculé en masse du burger végétarien, 10-20 % en masse de protéine, 8-22 % en masse de graisse et 50-70 % en masse d'eau.

4. Burger végétarien selon l'une quelconque des revendications précédentes, dans lequel les morceaux de TVP contiennent, calculé en masse de la matière sèche des morceaux de TVP, 50-80 % en masse de protéine, 0-5 % en masse de graisse et 3-30 % en masse de fibre diététique.

5. Burger végétarien selon l'une quelconque des revendications précédentes, dans lequel au moins 80 % en masse de la quantité totale de protéine des morceaux de TVP sont une protéine choisie parmi de la protéine de soja, protéine de pois, du gluten et des combinaisons de ceux-ci.

6. Burger végétarien selon la revendication 5, dans lequel au moins 80 % en masse de la quantité totale de protéine des morceaux de TVP sont de la protéine de soja.

7. Burger végétarien selon l'une quelconque des revendications précédentes, dans lequel le burger végétarien contient, calculé en masse de la matière sèche du burger, 2,5-10 % en masse de méthylcellulose.

8. Burger végétarien selon l'une quelconque des revendications précédentes, dans lequel la méthylcellulose présente une température de gélification d'au moins 30°C.

9. Burger végétarien selon l'une quelconque des revendications précédentes, dans lequel le burger végétarien contient, calculé en masse de la matière sèche du burger, 0,3-6,0 % en masse de patatine non-dénaturée.

10. Burger végétarien selon l'une quelconque des revendications précédentes, dans lequel les méthylcellulose et patatine non-dénaturée sont présentes dans la suspension de liant dans un rapport de masse de 1:1 à 6:1.

11. Burger végétarien selon l'une quelconque des revendications précédentes, dans lequel le burger comprend les constituants suivants :
(a) 50-72 % en masse du burger végétarien de morceaux de TVP hydratée ;
(b) 25-42 % en masse du burger végétal d'une suspension de liant contenant les ingrédients suivants
(b1) 3,0-8,0 % en masse de la suspension de liant de méthylcellulose ;
(b2) 0,5-6 % en masse de la suspension de liant de patatine non-dénaturée ;
(b3) 35-65 % en masse de la suspension de liant de graisse ;
(b4) 32-60 % en masse de la suspension de liant d'eau ;
dans lequel la combinaison des constituants (a) à (b) constitue au moins 90 % en masse du burger végétarien.

12. Procédé de préparation d'un burger végétarien selon l'une quelconque des revendications précédentes pour consommation, ledit procédé consistant à frire ou griller le burger végétarien pour produire un burger végétarien cuit et à disposer le burger végétarien cuit à l'intérieur d'un petit pain coupé.

13. Procédé de préparation d'un burger végétarien selon l'une quelconque des revendications 1-11, ledit procédé comprenant :
i. le mélange de particules de protéine végétale texturée (TVP) avec de l'eau pour produire des morceaux de TVP hydratée ;
ii. le mélange des morceaux de TVP hydratée avec de la méthylcellulose, un concentré de protéine de pomme de terre, de la graisse et de l'eau pour produire une pâte végétarienne, dans lequel le concentré de protéine de pomme de terre contient, calculé en masse de la matière sèche du concentré de protéine de pomme de terre, au moins 50 % en masse de patatine non-dénaturée ;
iii. le façonnage de la pâte végétarienne en une galette.

14. Procédé selon la revendication 13, dans lequel la pâte végétarienne présente une température d'au plus 10°C lorsqu'elle est façonnée en une galette.

15. Procédé selon la revendication 13 ou 14, dans lequel pendant l'étape ii les ingrédients de la galette sont maintenus à une température dans l'intervalle de -5°C à 30°C.
